# EUROPÄISCHE PATENTSCHRIFT

(11) **EP 2 869 397 B1**
(45) Veröffentlichungstag und Bekanntmachung des Hinweises auf die Patenterteilung: **01.02.2017**
(21) Anmeldenummer: 13191577.9
(22) Anmeldetag: 05.11.2013
(51) Int. Cl.: H01Q 1/22, G01F 23/284, H01Q 3/08

(54) **Schwenkbare Hornantenne für ein Füllstandradar**
Pivotable horn antenna for a fill level radar
Antenne à cornet pivotante pour un radar de niveau de remplissage

(43) Veröffentlichungstag der Anmeldung: 06.05.2015
(73) Patentinhaber: VEGA Grieshaber KG, 77709 Wolfach (DE)
(72) Erfinder: Lenk, Fritz, 77761 Schiltach (DE); Hengstler, Clemens, 77716 Haslach (DE)
(74) Vertreter: Maiwald Patentanwalts GmbH

(56) Entgegenhaltungen:
- DE-A1-102004 041 857
- DE-A1-102007 061 571
- DE-U1-202005 008 528
- US-A1- 2008 100 501

## Beschreibung

### Gebiet der Erfindung

Die vorliegende Erfindung betrifft die Füllstandradartechnik. Insbesondere betrifft die Erfindung eine schwenkbare Hornantenne für ein Füllstandradar sowie ein Füllstandradar mit einer derartigen Hornantenne.

### Technischer Hintergrund

Füllstandradarmessgeräte (Füllstandradare) können an den Flanschen von Füllgutbehältern angebracht werden. Bei den Behälterflanschen handelt es sich um Öffnungen in der Behälterdecke mit typischen Durchmessern von mehreren Zoll. Die Füllstandradare werden dann mithilfe von mehreren Schrauben auf diesen Flansch aufgeschraubt.

Um die Qualität des von dem Füllstandradarmessgerät erfassten Echosignals zu verbessern, kann es hilfreich sein, das Füllstandradarmessgerät nach dessen Einbau in den Behälter zu verschwenken und auf die Füllstandoberfläche auszurichten, um beispielsweise einen schrägen Einbau des Geräts zu korrigieren.

DE 20 2005 008 528 U1 beschreibt ein Messgerät der Prozessmesstechnik mit einer Parabolantenne. Die Parabolantenne ist an einem Hohlleiter angebracht, der durch einen Kugel gelenkkopf hindurchläuft. Der Kugelgelenkkopf befindet sich in einer Gelenkpfanne, die ein Außengewinde aufweist, das auf derselben Höhe wie der Kugelgelenkkopf angeordnet ist.

DE 10 2007 061 571 A1 beschreibt ein Füllstandmessgerät mit einer Parabolantenne, die an einem Wellenleiter mit Kugelgelenkkopf befestigt ist. Der Kugelgelenkkopf befindet sich in einer Gelenkpfanne mit konstantem Außendurchmesser.

US 2008/0100501 beschreibt eine schwenkbare Antenne für ein Füllstandradargerät. Zusammenfassung der Erfindung

Es ist eine Aufgabe der Erfindung, eine vereinfachte Anbringung von Füllstandradarmessgeräten an einen Behälter zu ermöglichen und gleichzeitig eine Korrigierbarkeit eines schrägen Einbaus des Messgeräts im Behälter bereitzustellen. Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist eine schwenkbare Antennenanordnung für ein Füllstandradar angegeben. Die schwenkbare Antennenanordnung weist eine, das Sendesignal abstrahlende Antenne, beispielsweise in Form eines Antennenhorns, auf.

Darüber hinaus ist ein einen Bereich in Form eines Kugelgelenkkopfs vorgesehen. Der Kugelgelenkkopf kann Teil der Antenne sein oder oberhalb der Antenne angeordnet sein, so dass sich der Kugelgelenkkopf zwischen der Elektronik des Füllstandradars, die das Sendesignal erzeugt, und der Antenne befindet. Grundsätzlich kann auch vorgesehen sein, den Kugelgelenkkopf am unteren Ende der Antenne anzuordnen.

Weiter ist ein Gehäuse mit einer Gelenkpfanne vorgesehen, in der sich der Kugelgelenkkopf drehen lässt. Das Gehäuse weist ein Außengewinde auf, um die Antenne in eine Gewindebohrung eines Behälters, in dem sich das Füllgut, dessen Füllstand gemessen werden soll, befindet, einzuschrauben.

Es ist somit keine Flanschverbindung zwischen Behälter und Füllstandradar notwendig. Vielmehr ist das Füllstandradarmessgerät ganz einfach in eine Gewindebohrung des Behälters eingeschraubt.

Diese Art der Anbringung ist einfach und effektiv. Eine aufwändige Flanschverbindung zwischen Füllstandradarmessgerät und Behälter ist nicht notwendig. Es besteht auch die Möglichkeit, in eine dünne Blechwand eine Bohrung anzubringen, das Außengewinde des Gehäuses durchzustecken und mit einer Mutter zu befestigen.

Die Gewindebohrung weist beispielsweise einen Durchmesser von einem Zoll, 1,5 Zoll oder 2 Zoll auf.

Die Gelenkpfanne weist einen unteren Bereich auf und einen in einem unteren Bereich anbringbaren oberen Bereich. Durch den unteren Bereich kann das Antennenhorn von oben hindurchgeführt werden, so dass es auf der anderen Seite des unteren Bereichs aus der Gelenkpfanne herausragt. Nachdem das Antennenhorn durch den unteren Bereich hindurchgeführt wurde, wird der obere Bereich am unteren Bereich angebracht.

Dies kann beispielsweise durch Aufschrauben des oberen Bereichs auf den unteren Bereich erfolgen. Beispielsweise weist der obere Bereich hierfür eine oder mehrere Bohrungen auf, durch welche Schrauben geführt werden können, die in entsprechende Gewindebohrungen im unteren Bereich eingeschraubt werden.

Alternativ oder zusätzlich kann vorgesehen sein, dass der obere Bereich ein Außengewinde aufweist, welches in ein entsprechendes Innengewinde des unteren Bereichs eingeschraubt wird.

Durch das Anziehen der Verschraubung zwischen dem oberen Bereich und dem unteren Bereich kann der Kugelgelenkkopf in der Gelenkpfanne eingeklemmt werden, so dass sich die Hornantenne nicht mehr verschwenken lässt. Das Lösen einer der bspw. drei Schrauben reicht aus, um die den Kugelgelenkkopf zu lösen, so dass die Antenne verschwenkt werden kann. Die übrigen Schrauben können einen anderen Schraubenkopf oder sonstige Markierung aufweisen, damit der Benutzer erkennt, welche Schraube zum Verschwenken der Antenne zu lösen ist.

Der untere Bereich des Gehäuses der Gelenkpfanne weist ein Außengewinde auf, um die Hornantenne in die Gewindebohrung des Behälters einzuschrauben.

Grundsätzlich könnte das Außengewinde auch am oberen Bereich des Gehäuses angebracht sein. In diesem Fall würde dann wohl die Hornantenne vom Inneren des Behälters in die Gewindebohrung eingeschraubt werden.

Gemäß einer weiteren Ausführungsform der Erfindung ist der der schwenkbaren Antennenanordnung als Hohlleiter ausgeführt, an dessen Ende ein Antennenhorn angebracht ist.

Das von der Signalerzeugungselektronik des Füllstandradars generierte Sendesignal wird also durch den Hohlleiter des Kugelgelenkkopfs geleitet und dann in das Horn der Antennenanordnung eingespeist.

Gemäß einer weiteren Ausführungsform der Erfindung ist der Kugelgelenkkopf an das Antennenhorn angeschraubt. Beispielsweise ist die Verbindung flanschartig ausgeführt.

Gemäß einem weiteren Aspekt der Erfindung ist ein Füllstandradar mit einer oben und im Folgenden beschriebenen schwenkbaren Hornantenne angegeben.

Im Folgenden werden mit Verweis auf die Figuren Ausführungsbeispiele der Erfindung beschrieben.

### Kurze Beschreibung der Figuren

Fig. 1 A, 1B und 1C zeigen eine schwenkbare Antennenanordnung gemäß einem ersten Ausführungsbeispiel der Erfindung.
Fig. 2A und 2B zeigen eine schwenkbare Antennenanordnung gemäß einem weiteren Ausführungsbeispiel der Erfindung.
Fig. 3A und 3B zeigen eine schwenkbare Antennenanordnung gemäß einem weiteren Ausführungsbeispiel der Erfindung.
Fig. 4A und 4B zeigen eine schwenkbare Antennenanordnung gemäß einem weiteren Ausführungsbeispiel der Erfindung.
Fig. 5 zeigt ein Kugelgelenk einer schwenkbaren Antennenanordnung gemäß einem weiteren Ausführungsbeispiel der Erfindung.
Fig. 6 zeigt ein Füllstandmessgerät in einem Behälter gemäß einem Ausführungsbeispiel.

### Detaillierte Beschreibung von Ausführungsbeispielen

Die Darstellungen in den Figuren sind schematisch und nicht maßstäblich.

Werden in der folgenden Figurenbeschreibung die gleichen Bezugsziffern verwendet, so bezeichnen diese gleiche oder ähnliche Elemente. Gleiche oder ähnliche Elemente können aber auch durch unterschiedliche Bezugszeichen bezeichnet sein.

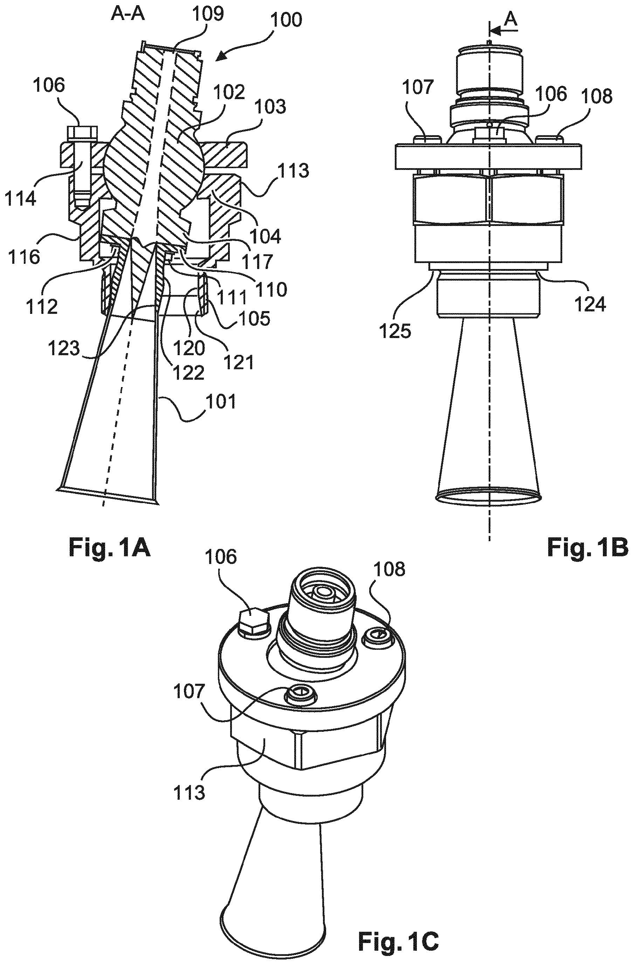

Fig. 1 A, 1B und 1C zeigen eine Schnittdarstellung, eine Seitenansicht und eine perspektivische Ansicht einer schwenkbaren Antennenanordnung gemäß einem Ausführungsbeispiel der Erfindung. Die Antennenanordnung kann als Hornantenne ausgeführt sein. Es sich aber auch andere Antennenformen vorgehen, beispielsweise Stabantenne.

Die schwenkbare Antennenanordnung weist ein Antennenhorn 101 auf, dessen oberes Ende einen Flansch 110 aufweist, der mit mehreren Schrauben 111, 112 an einem entsprechenden Gegenflansch eines sich an das Antennenhorn anschließenden Kugelgelenkkopfes 102 angebracht ist. Der Kugelgelenkkopf 102 weist einen kugelförmigen Bereich auf, der von einer zweiteiligen Gelenkpfanne 103, 104 gelagert wird.

Die zweiteilige Gelenkpfanne ist Teil eines Gehäuses und weist einen oberen Bereich 103 auf, der beispielsweise plattenartig oder scheibenartig ausgeführt sein kann und einen runden Querschnitt aufweist. Dieser obere Bereich 103 weist mehrere Bohrungen, beispielsweise drei Bohrungen, auf, durch welche die Schrauben 106, 107, 108 geführt werden können. In der Fig. 1A ist eine dieser Bohrungen 114 zu sehen.

Die drei Schrauben können werkseitig verklebt sein und der Benutzer löst lediglich die Schraube 106, welche einen anderen Schraubenkopf als die beiden übrigen Schrauben aufweist, um die Antenne zu verkippen.

Der untere Bereich 104 ist gehäuseartig ausgestaltet und umgibt Teile des Kugelgelenkkopfes 102 sowie des Antennenhorns 101 der schwenkbaren Hornantenne.

Am unteren Ende des unteren Bereichs 104 der Gelenkpfanne befindet sich ein Außengewinde 105, welches in eine entsprechende Gewindebohrung des Füllgutbehälters eingeschraubt werden kann. Das Außengewinde weist einen Durchmesser von beispielsweise 1,5 Zoll oder 1 Zoll auf.

Ein zusätzliches Außengewinde kann auch in der Mittleren Sektion 116 des unteren Bereichs 104 der Gelenkpfanne angebracht sein.

Über dem Außengewinde 105 befindet sich eine Einschnürung 124 des Gehäuses, an welche sich eine Anstoßfläche 125 anschließt, welche bei eingeschraubter Antennenanordnung gegen die äußere Oberfläche des Behälters stößt.

Unter dem Kugelgelenkkopf 102 befindet sich eine Verdickung 117, welche den Flansch zum Anflanschen des Antennenhorns 101 ausbildet, und in welchem Innengewindebohrungen zum Anschrauben (Anflanschen) des Antennenhorns 101 bereitgestellt sein können.

Der Innenbereich des Kugelgelenkkopfes 102 ist als Hohlleiter ausgeführt und dient der Übertragung des Sendesignals zur Hornantenne und zur Übertragung des von der Hornantenne aufgenommenen Empfangssignals zur Schnittstelle 109, von welcher aus das Empfangssignal weiter zur Elektronik des Füllstandradars weitergeleitet wird.

Wie in den Figuren zu erkennen ist, wird der Außenquerschnitt des unteren Bereichs 104 des Gehäuses stufenförmig kleiner. Es sind beispielsweise drei Abstufungen vorgesehen, wobei das untere Drittel das Außengewinde 105 aufweisen kann und das obere Drittel 113 beispielsweise einen sechseckigen Querschnitt aufweist, so dass ein Schraubenschlüssel daran angelegt werden kann, um die Hornantenne in der Behälterbohrung zu verschrauben.

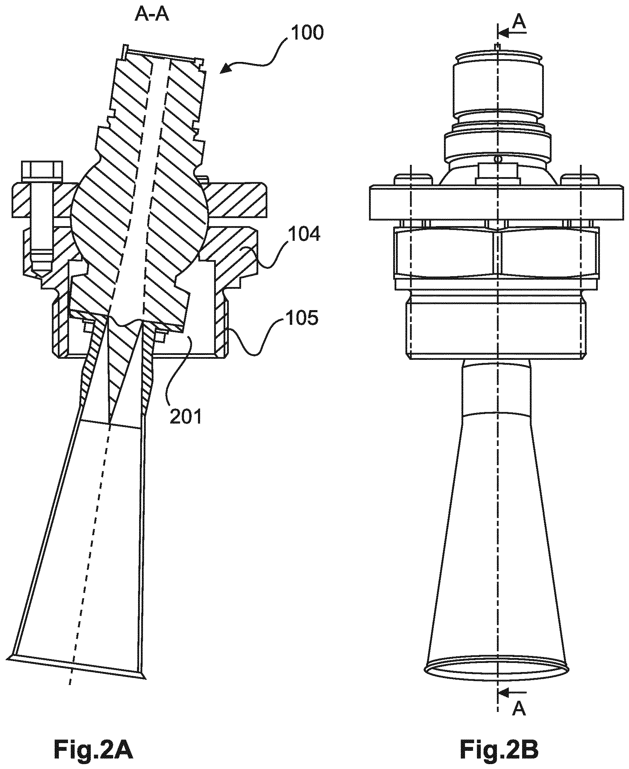

Das Ausführungsbeispiel der Fig. 1A bis 1C weist beispielsweise ein 1 ½ Zoll Außengewinde 105 auf, wohingegen das Ausführungsbeispiel der Fig. 2A und 2B ein 2 Zoll Außengewinde 105 aufweisen kann. In diesem Ausführungsbeispiel ist der Querschnitt des unteren Bereichs der Gelenkpfanne 104 nicht dreistufig, sondern zweistufig.

Die Aussparung 201 im unteren Bereich der Gelenkpfanne, in der sich der flanschartige Bereich des Kugelgelenks sowie der obere Bereich der Hornantenne bewegt, ist zylinderförmig ausgestaltet.

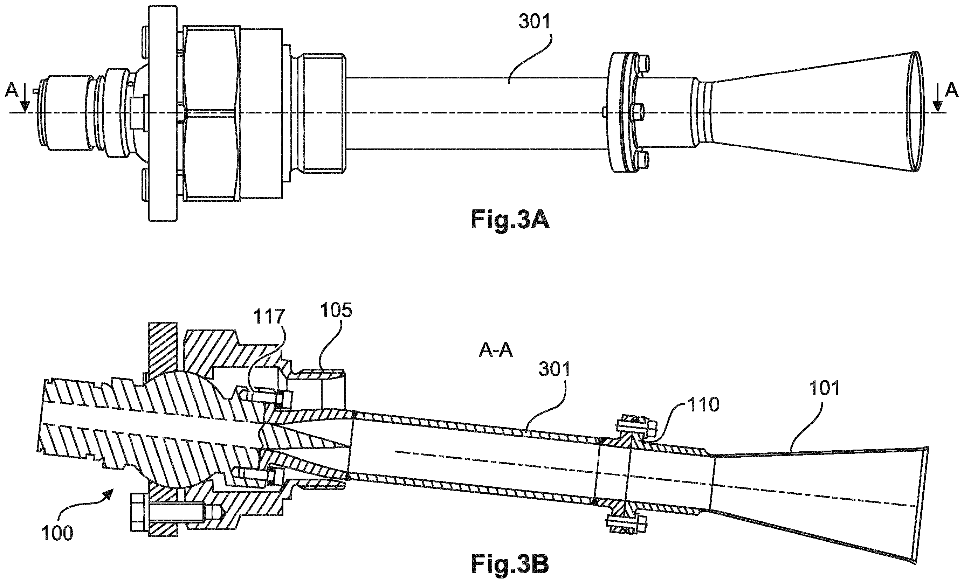

Die Fig. 3A und 3B zeigen eine schwenkbare Hornantenne mit einem Außengewinde 105 von beispielsweise 1 ½ Zoll, wobei die Hornantenne eine Antennenverlängerung 301 aufweist. Diese Antennenverlängerung 301 kann zwischen dem Flansch 110 der Hornantenne 101 und dem Flansch 117 der Gelenkpfanne angeordnet werden.

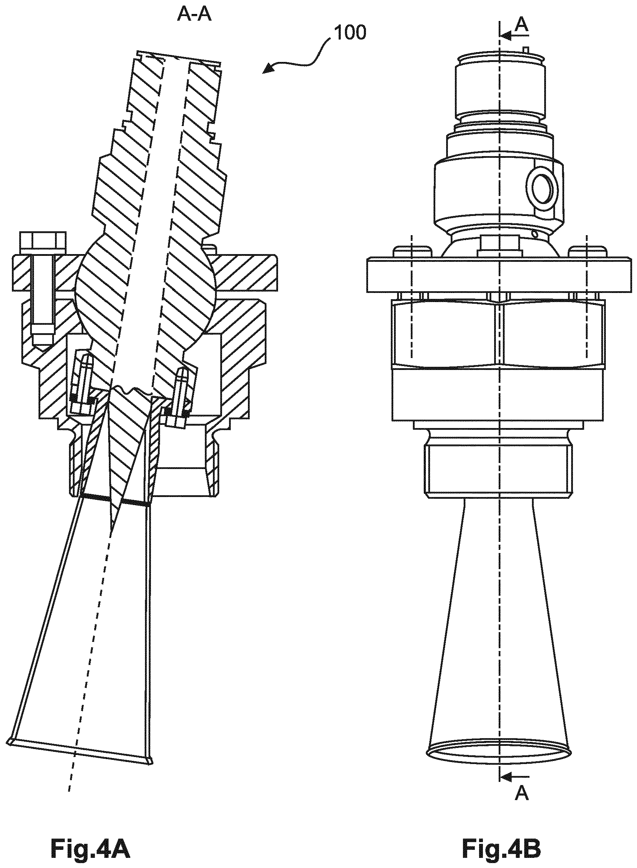

Die Fig. 4A und 4B zeigen eine schwenkbare Hornantenne mit ebenfalls 1 ½ zolligem Außengewinde des Gehäuses und einem Spülanschluss, um Luft durch die Antenne in den Behälter zu pumpen.

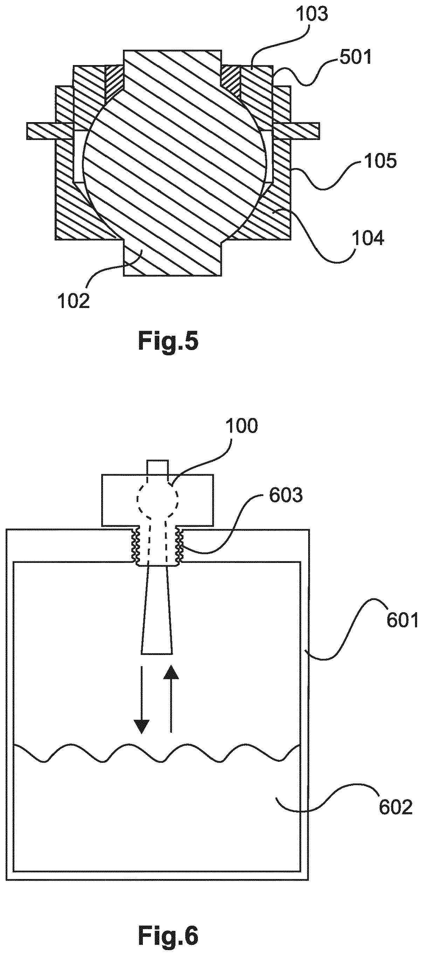

Fig. 5 zeigt einen Kugelgelenkkopf 102 einer schwenkbaren Hornantenne, der sich in einem Gehäuse mit einer Gelenkpfanne 103, 104 befindet. Der obere Bereich 103 des Gehäuses weist ein Außengewinde 501 auf, welches in den unteren Bereich 104 des Gehäuses eingeschraubt werden kann. Der untere Bereich 104 des Gehäuses kann ebenfalls ein Außengewinde 105 aufweisen, welches in eine Gewindebohrung im Behälterdeckel eingeschraubt werden kann.

Fig. 6 zeigt eine schwenkbare Hornantenne 100 eines Füllstandradars, eingebaut in einen Behälter 601. Hierfür weist der Behälter 601 im Deckenbereich eine Gewindebohrung 603 auf, in welche die schwenkbare Antennenanordnung eingeschraubt werden kann. Im Behälter befindet sich ein Füllgut 602, dessen Füllstand zu messen ist.

Die schwenkbare Antennenanordnung ist preisgünstig herzustellen und vom Kunden einfach zu montieren. An der Montagestelle ist wenig Aufwand erforderlich. Auf diese Weise kann das Füllstandmessgerät im Einschraubstutzen schwenk- und ausrichtbar montiert werden. Die Einschraubstutzen sind so aufgebaut, dass die grundlegenden Einzelteile des Geräts in allen Varianten mit Spülanschluss und Antennenverlängerung verwendet werden können. Eine Flanschverbindung zwischen Antennenanordnung bzw. Füllstandradar und Behälter ist nicht erforderlich.

Die Gewindegröße des Einschraubstutzens begrenzt den maximal nutzbaren Schwenkwinkel der Antennenanordnung. Beispielsweise kann der maximal nutzbare Schwenkwinkel bei einer Gewindegröße von 1 ½ Zoll bis minus 8 Grad betragen, bei einer Gewindegröße von 2 Zoll bis minus 10 Grad. Um den maximalen Schwenkwinkel zu maximieren, wird der Gewindestutzen (Einschraubstutzen, weiter oben auch als unterer Bereich des Gehäuses der Gelenkpfanne bezeichnet) möglichst stark ausgehöhlt. Er ist also in anderen Worten möglichst dünnwandig ausgeführt.

Wie in der 1 ½ Zoll Gewindeversion der Fig. 1A bis 1C zu sehen, kann zur Maximierung des Schwenkwinkels vorgesehen sein, dass der untere Bereich des Gelenkpfannengehäuses 104 an seinem unteren Ende zunächst eine zylinderförmige Aussparung 120 aufweist, welche dann zum Ende des unteren Bereichs hin im Bereich 121 konisch auseinander läuft.

Ebenso ist die Außenfläche des Antennenhorns in dessen oberem Bereich 122 nahe der Flanschverbindung 110 mit konstanter Wandstärke ausgeführt. In dem Bereich, wo das Antennenhorn bei maximalem Schwenkwinkel die Innenwandung 121 des unteren Teils 104 der Gelenkpfanne berührt, verschmälert sich jedoch die Wanddicke des Antennenhorns (siehe Bereich 123). Auf diese Weise kann der maximale Schwenkwinkel vergrößert werden.

Diese Geometrie ist auch im Ausführungsbeispiel der Fig. 4A und 4B zu sehen.

Im übrigen sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Schwenkbare Hornantenne für ein Füllstandradar (100), aufweisend:
ein Antennenhorn (101);
einen Bereich (102) in Form eines Kugelgelenkkopfs;
ein Gehäuse mit einer Gelenkpfanne (103, 104), in der sich der Kugelgelenkkopf drehen lässt;
wobei der Kugelgelenkkopf Teil des Antennenhorns ist oder oberhalb des Antennenhorns am Antennenhorn angebracht ist;
wobei ein unterer Bereich (104) des Gehäuses, durch welchen das Antennenhorn von oben durchführbar ist, Teile des Kugelgelenkkopfs und des Antennenhorns umgibt;
wobei der untere Bereich des Gehäuses einen Außendurchmesser aufweist, der nach unten hin stufenförmig kleiner wird;
wobei der untere Bereich des Gehäuses eine zylinderförmige Aussparung (120) und an seinem unteren Ende ein Außengewinde (105) aufweist, um die Hornantenne in eine Gewindebohrung (603) eines Behälters (601) einzuschrauben;
wobei das Antennenhorn in dem Bereich, wo das Antennenhorn bei maximalem Schwenkwinkel die Innenwandung (121) des unteren Bereichs des Gehäuses berührt, eine sich verschmälernde Wanddicke aufweist, so dass sich der maximale Schwenkwinkel vergrößert;
wobei das Außengewinde (105) einen Durchmesser von 1 Zoll, von 1,5 Zoll oder von 2 Zoll aufweist.

2. Schwenkbare Hornantenne nach Anspruch 1,
wobei das Gehäuse mit der Gelenkpfanne (103, 104) einen an den unteren Bereich (104) anbringbaren oberen Bereich (103) aufweist; und
wobei der untere Bereich (104) derart ausgeführt ist, dass das Antennenhorn (101) von oben durch den unteren Bereich hindurch führbar ist, bevor der obere Bereich am unteren Bereich angebracht ist.

3. Schwenkbare Hornantenne nach Anspruch 2,
wobei der obere Bereich (103) an den unteren Bereich (104) aufgeschraubt wird.

4. Schwenkbare Hornantenne nach Anspruch 3,
wobei der obere Bereich (103) zum Aufschrauben an den unteren Bereich (104) eine oder mehrere Bohrungen (114) aufweist.

5. Schwenkbare Hornantenne nach Anspruch 3,
wobei der obere Bereich (103) zum Aufschrauben an den unteren Bereich (104) ein weiteres Außengewinde (501) aufweist.

6. Schwenkbare Hornantenne nach einem der vorhergehenden Ansprüche,
wobei der Kugelgelenkkopf (102) als Hohlleiter ausgeführt ist, an dessen unterem Ende das Antennenhorn (101) angebracht ist und dessen oberes Ende zum Anschluss an die Elektronik des Füllstandradars ausgeführt ist.

7. Schwenkbare Hornantenne nach einem der vorhergehenden Ansprüche,
wobei der Kugelgelenkkopf (102) an das Antennenhorn (101) angeschraubt ist.

8. Füllstandradar (100) mit einer schwenkbaren Hornantenne nach einem der Ansprüche 1 bis 7.

## Claims

1. Pivotable horn antenna for a radar level indicator (100), comprising:
an antenna horn (101);
a region (102) in the form of a ball joint head;
a housing having a joint socket (103, 104), in which the ball joint head can rotate;
wherein the ball joint head is part of the antenna horn or is mounted above the antenna horn;
wherein a lower region (104) of the housing, through which the antenna horn can be moved, surrounds parts of the ball joint head and the antenna horn;
wherein the lower part of the housing has an outer diameter, which decreases stepwise when moving in a downward direction;
wherein the lower region of the housing has a cylindrical recess (120) and comprises an outer thread (105) at the lower end, for screwing the horn antenna in a threaded hole (603) of a container (601);
wherein the antenna horn has a decreasing wall thickness in the region, in which the antenna horn touches the inner wall (121) of the lower region of the housing when the tilt angle is maximum, such that the maximum tilt angle is increased;
wherein the outer thread (105) has a diameter of 1 inch, 1,5 inches or 2 inches.

2. Pivotable antenna arrangement according to claim 1,
wherein the housing having the joint socket (103, 104) comprises an upper region (103) that is attachable to the lower region (104); and
wherein the lower region is designed, such that the antenna horn (101) can be moved through the lower region from above, before the upper region is attached to the lower region.

3. Pivotable antenna arrangement according to any of the preceding claims,
wherein the upper region (103) is screwed onto the lower region (104).

4. Pivotable antenna arrangement according to claim 3,
wherein the upper region (103) comprises one or more holes (114) in order to be screwed onto the lower region (104).

5. Pivotable antenna arrangement according to claim 3,
wherein the upper region (103) comprises an external thread (501) in order to be screwed onto the lower region (104).

6. Pivotable antenna arrangement according to any of the preceding claims,
wherein the ball joint head (102) is designed as a waveguide, to the lower end of which the antenna (101) is attached and the upper end of which is designed for connection to the electronics of the radar level indicator.

7. Pivotable antenna arrangement according to any of the preceding claims,
wherein the ball joint head (102) is screwed onto the antenna (101).

8. Radar level indicator (100) comprising a pivotable antenna arrangement according to any of claims 1 to 7.

## Revendications

1. Antenne cornet pivotante pour un radar de niveau (100), comprenant :
un cornet d'antenne (101) ;
une zone (102) en forme de tête d'articulation sphérique ;
un carter avec un coussinet à rotule (103, 104), dans lequel peut tourner la tête d'articulation sphérique ;
la tête d'articulation sphérique faisant partie du cornet d'antenne ou étant montée sur le cornet au-dessus de ce dernier ;
une zone inférieure (104) du carter, au travers de laquelle le cornet d'antenne peut être introduit à partir du haut, entourant des parties de la tête d'articulation sphérique et du cornet d'antenne ;
la zone inférieure du carter présentant un diamètre extérieur, rétréci en échelon en direction du bas ;
la zone inférieure du carter présentant un creux cylindrique (120) et un filetage extérieur (105) sur son extrémité inférieure, pour visser l'antenne cornet dans un taraudage (603) d'un récipient (601) ;
le cornet d'antenne présentant une épaisseur de paroi terminée en pointe dans la zone dans laquelle le cornet d'antenne, pour un angle de pivotement maximal, entre au contact de la paroi intérieure (121) de la zone inférieure du carter, de sorte que l'angle de pivotement maximal s'agrandit ;
le filetage extérieur (105) présentant un diamètre d'1 pouce, d'1,5 pouce ou de 2 pouces.

2. Antenne cornet pivotante selon la revendication 1,
le carter avec le coussinet à rotule (103, 104) présentant une zone supérieure (103) qui peut être montée sur la zone inférieure (104) ; et
la zone inférieure (104) étant réalisée de telle sorte que le cornet d'antenne (101) peut être introduit à partir du haut au travers de la zone inférieure, avant que la zone supérieure ne soit montée sur la zone inférieure.

3. Antenne cornet pivotante selon la revendication 2,
la zone supérieure (103) étant vissée sur la zone inférieure (104).

4. Antenne cornet pivotante selon la revendication 3,
la zone supérieure (103) présentant un ou plusieurs alésages (114) pour le vissage sur la zone inférieure (104).

5. Antenne cornet pivotante selon la revendication 3,
la zone supérieure (103) présentant un filetage extérieur supplémentaire (501) pour le vissage sur la zone inférieure (104).

6. Antenne cornet pivotante selon l'une des revendications précédentes,
la tête d'articulation sphérique (102) étant réalisée sous forme de guide d'ondes, à l'extrémité inférieure duquel est monté le cornet d'antenne (101) et dont l'extrémité supérieure est réalisée pour la jonction à l'électronique du radar de niveau.

7. Antenne cornet pivotante selon l'une des revendications précédentes,
la tête d'articulation sphérique (102) étant vissée sur le cornet d'antenne (101).

8. Radar de niveau (100) avec une antenne cornet pivotante selon l'une des revendications 1 à 7.
